# FASCICULE DE BREVET EUROPEEN

(11) **EP 2 983 272 B1**
(45) Date de publication et mention de la délivrance du brevet: **05.10.2022**
(21) Numéro de dépôt: 15178872.6
(22) Date de dépôt: 29.07.2015
(51) Int. Cl.: H02K 1/26, H02K 15/02, H02K 7/00

(54) **INDUIT DE MACHINE ÉLECTRIQUE TOURNANTE À PERFORMANCES MAGNÉTIQUES AMÉLIORÉES**
ANKER EINER UMLAUFENDEN ELEKTRISCHEN MASCHINE MIT VERBESSERTEN MAGNETISCHEN LEISTUNGEN
ARMATURE OF ROTARY ELECTRIC MACHINE WITH IMPROVED MAGNETIC PERFORMANCES

(30) Priorité: 31.07.2014 FR 1457461
(43) Date de publication de la demande: 10.02.2016
(73) Titulaire: VALEO EQUIPEMENTS ELECTRIQUES MOTEUR, 94046 Créteil Cedex (FR)
(72) Inventeur: DROZDEK, Marius, 38280 VILLETTE D'ANTHON (FR); VERNAY, Eric, 38090 VILLEFONTAINE (FR); ANDREUX, Raphaël, 69003 LYON (FR); METRAL, Jean Sébastien, 38290 LA VERPILLIERE (FR); LABBE, Nicolas, 69003 LYON (FR)

(56) Documents cités:
- EP-A1- 0 327 470
- WO-A1-2004/098023
- DE-A1-102009 046 530
- FR-A1- 2 518 841
- JP-A- 2001 349 294
- JP-A- 2004 140 950
- JP-A- 2014 027 774

## Description

L'invention porte sur un induit de machine électrique tournante à performances magnétiques améliorées. L'invention trouve une application particulièrement avantageuse, mais non exclusive, dans le domaine des démarreurs pour véhicule automobile.

On connaît des machines électriques munies d'un stator, ou inducteur, comportant plusieurs aimants permanents ou des pôles bobinés (électroaimants) et d'un rotor, ou induit, comportant des conducteurs formant le bobinage du rotor. Un entrefer existe entre la périphérie externe du rotor et la périphérie interne du stator.

L'induit comporte un corps de forme cylindrique muni d'un moyeu central et de dents issues du moyeu délimitant deux à deux des encoches. Un bobinage est formé par un ensemble de conducteurs insérés à l'intérieur des encoches. Le corps du rotor est généralement réalisé par un empilement de tôles d'épaisseur fine, de façon à former un paquet de tôles emmanché à force sur l'arbre de la machine.

Pour éviter des mises à la masse, un isolant d'encoche est inséré dans les encoches entre les conducteurs et la tôle reliée au potentiel de la masse via le carter. En outre, des joues axiales réalisées dans un matériau isolant sont ajoutées au moment de l'insertion des conducteurs de manière à éviter d'endommager les conducteurs pendant cette opération délicate.

Les dents comprennent chacune une surface adaptée à être en contact avec l'entrefer entre le rotor et le stator. Dans les rotors de l'état de l'art, ces surfaces extérieures des dents présentent une configuration telle que la collection de flux magnétique est limitée.

L'invention vise à améliorer les performances magnétiques de la machine en proposant un induit de machine électrique tournante destinée à être utilisée dans un véhicule automobile comprenant:
un corps réalisé dans un matériau ferromagnétique comprenant:
une culasse, et
des dents s'étendant à partir de la portion central, chacune des dents comprenant une surface destinée à venir en contact avec un entrefer de ladite machine, ladite surface ayant une longueur axiale supérieure à une longueur axiale de la dite culasse. Les documents JP2014027774 et DE102009046530 divulguent un tel induit.

L'invention permet ainsi, du fait de la forme particulière des surfaces des dents en contact avec l'entrefer, de collecter d'avantage de flux au niveau de l'entrefer par rapport à une configuration classique d'induit. On maximise ainsi la conversion électromagnétique de la machine électrique.

Selon une réalisation, un entrefer est formé entre deux surfaces voisines sur toute leur longueur axiale

Selon une réalisation, ledit corps comprend au moins une portion réalisée dans un matériau magnétique composite.

Selon une réalisation, chacune des surfaces des dents comprend au moins une extrémité axiale réalisée dans un matériau magnétique composite. On facilite ainsi la réalisation des extrémités des surfaces des dents tournées vers l'entrefer qui pourront être obtenues par frittage.

Selon l'invention, ledit corps comporte deux portions axiales extrêmes réalisées en matériau magnétique composite, le reste des dents et la culasse étant réalisé d'un seul tenant en tôle feuilletée.

En effet, si c'est dans un autre matériau que composite type massif tel que du fer, les portions vont travailler avec l'effet de peau et donc produire des pertes par courant induit, vont produire de la chaleur, sans ajouter un couple significant. Au contraire avec un materiau en composite, les portions collectent les flux au niveau de l'entrefer avec beaucoup moins de contrainte que celle évoqué avec du fer, et donc ajoutent un couple dans la proportion de la longueur ajoutée par rapport à la longueur du paquet de tôle.

Selon une réalisation, les deux portions axiales extrêmes dudit corps sont plaquées de part et d'autre d'une portion centrale formée par un paquet de tôles.

Selon une réalisation non revendiquée, ledit corps ferromagnétique est réalisé entièrement dans un matériau magnétique composite.

Selon une réalisation non revendiquée, ledit induit est dépourvu d'isolant d'encoche. On maximise ainsi le taux de remplissage des encoches. En outre, du fait de la mise en contact directe des conducteurs avec l'induit, on améliore les échanges thermiques dans la machine électrique.

Selon une réalisation, ledit corps ferromagnétique est fixé sur un arbre de ladite machine électrique tournante par collage.

Selon une réalisation, ledit induit est monté sur un arbre de ladite machine électrique tournante via un système à clavette.

Selon une réalisation, le matériau magnétique composite est de type composite magnétique souple (matériau SMC). En effet, si c'est dans un autre matériau que composite type massif tel que du fer, les portions vont travailler avec l'effet de peau et donc produire des pertes par courant induit, vont produire de la chaleur, sans ajouter un couple significant. Au contraire avec un materiau en composite type smc, les portions collecte les flux au niveau de l'entrefer avec beaucoup moins de contrainte que celle évoqué avec du fer, et donc ajouter un couple dans la proportion de la longueur ajouter par rapport à la longueur du paquet de tôle.

En effet, dans un SMC, les grains d'aciers sont isolés électriquement les uns des autres et donc limite la création de courant induit et donc limite les pertes par courant de Foucault.

Selon une réalisation, un bobinage est formé par un ensemble de conducteurs insérés dans des encoches dudit corps de l'induit.

Selon une réalisation, lesdites dents présentent chacune une face d'extrémité axiale munie d'empreintes pour le guidage des conducteurs formant un bobinage.

Selon une réalisation, chaque conducteur prend la forme d'une épingle.

Selon une réalisation, ledit induit consiste en un rotor appartenant à un démarreur de véhicule automobile.

Selon une autre réalisation, ledit induit consiste en un stator d'un alternateur de véhicule automobile.

L'invention a également pour objet une machine électrique tournante de démarreur de véhicule automobile munie d'un induit défini précédemment.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en perspective d'un corps de rotor de machine électrique tournante non revendiquée appartenant à un démarreur de véhicule automobile;
La figure 2 est une vue en coupe longitudinale partielle du corps du rotor de la figure 1 réalisée au niveau d'une dent;
La figure 3 est une vue en perspective détaillée d'une dent du corps du rotor de la figure 1 ;
La figure 4 est une vue en perspective d'une épingle utilisée pour réaliser le bobinage du rotor selon la présente invention;
La figure 5 est une vue en coupe transversale d'une encoche du corps du rotor selon la présente invention à l'intérieur de laquelle sont insérés des conducteurs en épingle;
La figure 6 est une vue en perspective du rotor fini selon une réalisation non revendiquée;
La figure 7 est une vue en perspective d'un mode de réalisation du corps du rotor selon la présente invention;
La figure 8 est une vue en perspective d'une des joues axiales utilisées avec un mode de réalisation non revendiqué;
La figure 9 est une vue en perspective détaillée des dents de la joue axiale de la figure 8;
La figure 10 est une vue en coupe longitudinale d'un mode de réalisation du corps du rotor selon la présente invention;

Les éléments identiques, similaires, ou analogues conservent la même référence d'une figure à l'autre.

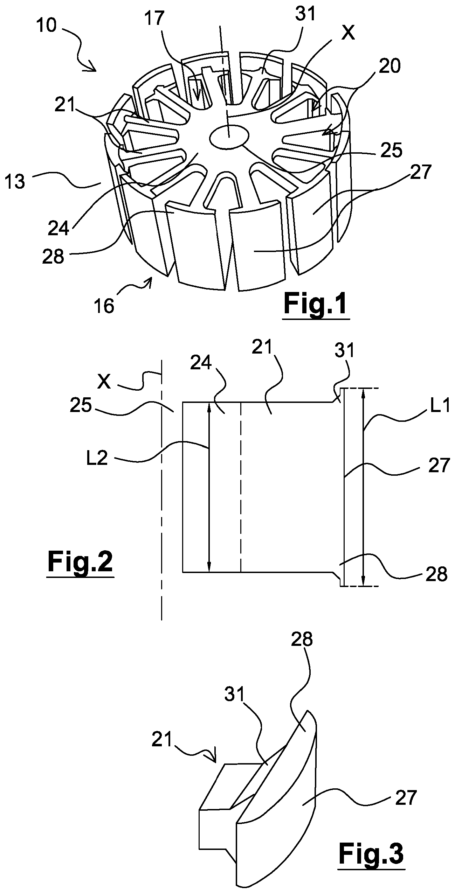

La figure 1 montre un corps 10 d'un rotor 11 de machine électrique tournante appartenant à un démarreur de machine électrique.

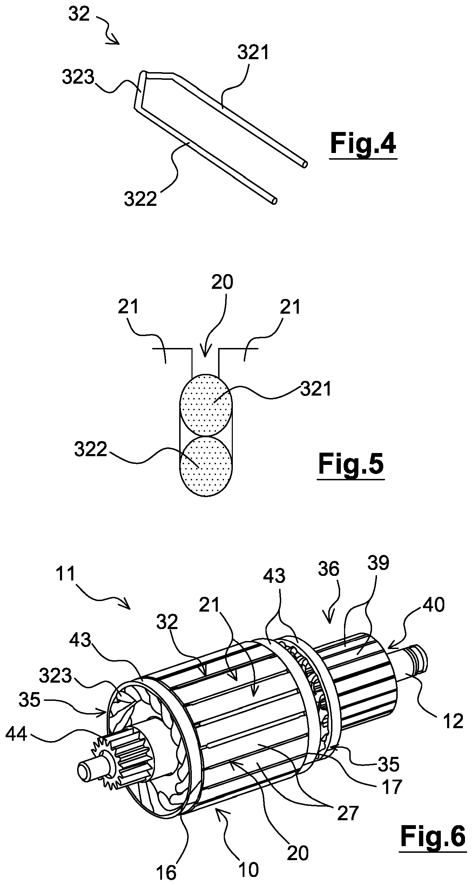

Ce corps 10 ferromagnétique d'axe X est destiné à être monté sur un arbre 12 de la machine électrique visible sur la figure 6. Ce corps 10 présente une périphérie externe 13 de forme cylindrique délimitée axialement par deux faces d'extrémité 16, 17. La périphérie externe 13 du corps 10 et la périphérie interne du stator (non représenté) de la machine électrique tournante sont séparés par un entrefer de façon connue en soi.

Dans ce mode de réalisation, le corps 10 est réalisé entièrement dans un matériau magnétique composite. Ce matériau est en l'occurrence de type SMC acronyme pour "Soft Magnetic Composite" en anglais, soit un "composite magnétique souple". Ce matériau est constitué de particules de métal, en l'occurrence de fer, isolées les unes par rapport aux autres par une couche de matériau électriquement isolant, tel que de la résine.

Un tel matériau possède des pertes par courants de Foucault particulièrement faibles, ce qui permet son utilisation pour des applications à fréquences élevées. Ce matériau présente l'avantage de posséder des propriétés magnétiques très proches de celles du métal.

Des encoches 20 sont ménagées dans le corps 10 de manière à déboucher axialement de part et d'autre du corps 10 et radialement dans la périphérie externe 13 du corps 10. Ces encoches 20, réparties angulairement de manière régulière sur la circonférence du corps 10, sont délimitées chacune par deux dents 21 successives. Ces dents 21, qui s'étendent axialement et radialement, sont issues d'une culasse 24 s'étendant également axialement et radialement. Cette culasse24 comporte une ouverture 25 pour autoriser le passage de l'arbre 12 de la machine.

Les dents 21 comprennent chacune une surface extérieure 27 destinée à être en contact avec l'entrefer entre le rotor 11 et le stator. Comme on peut le voir clairement sur la figure 2, chaque surface extérieure 27 a une longueur axiale L1 supérieure à longueur axiale L2 de la culasse 24.

Chaque surface extérieure 27 appartient en l'occurrence à un rebord 28 s'étendant circonférentiellement de part et d'autre des extrémités libres des dents 21. Une partie 31 bien visible sur la figure 3, en l'occurrence de forme inclinée, s'étend entre une face d'extrémité axiale d'une dent 21 et la face intérieure d'un rebord 28 tournée vers l'axe X du corps 10 qui lui est sensiblement perpendiculaire.

La forme particulière des dents 21 peut être aisément obtenue grâce à l'utilisation du matériau magnétique composite dont la forme peut être adaptée par frittage.

Du fait de la relative fragilité du matériau composite, le rotor 11 est de préférence fixé sur l'arbre 12 par collage. Alternativement ou en complément du collage, le rotor 11 pourra coopérer avec l'arbre 12 par l'intermédiaire d'un système à clavette lié en rotation avec l'arbre 12 et pénétrant à l'intérieur d'une ouverture de forme correspondante réalisée dans le corps 10.

Pour former le bobinage, un ensemble de conducteurs 32 de type épingle est inséré à l'intérieur de chacune des encoches 20. Plus précisément, chaque conducteur 32 visible sur la figure 4 est revêtu d'une couche électriquement isolante, telle que de l'émail. Chaque conducteur 32 présente deux branches 321, 322 reliées par un fond 323 de manière à avoir une forme sensiblement en U.

Comme cela est visible sur la figure 5, les conducteurs 32 sont insérés à l'intérieur des encoches 20 sur deux couches distinctes: la couche supérieure et la couche inférieure. Si une des branches 321 est positionnée dans la couche inférieure alors l'autre branche 322 se situe dans la couche supérieure et inversement. La section transversale des conducteurs 32 est ici de forme ronde. En variante, la section peut être de forme carrée ou rectangulaire. Les parties des conducteurs 32 s'étendant en saillie par rapport aux faces d'extrémités axiale 16, 17 du corps 10 du rotor 11 forment les chignons 35 du bobinage (cf. figure 6).

L'isolation électrique se faisant dans le matériau de l'induit 11 lui-même, il est possible de profiter de cette propriété en simplifiant toutes les étapes nécessaires pour éviter les mises à la masse des conducteurs 32. Ainsi, on peut supprimer le papier isolant entre les conducteurs 32 et les parois internes des encoches 20 ainsi que les jeux de montage pour éviter les court-circuits avec le corps 10. En pratique, le fait de supprimer le papier isolant ainsi que les jeux de montage permet de récupérer environ six dixièmes de millimètre par dent 21 et donc de maximiser le taux de remplissage des encoches 20. De plus, comme cela est bien visible en figure 5, les conducteurs 32 peuvent être en contact avec l'induit massif 10 dans les encoches 20 sans risque de mise à la masse, en sorte que les échanges thermiques sont améliorés. Un vernis d'imprégnation pourra être utilisé pour combler les jeux dans les encoches 20.

Par ailleurs, comme montré sur la figure 6, le rotor 11 est pourvu d'un collecteur 36 comprenant une pluralité de lames 39 électriquement conductrices auxquelles les extrémités libres des conducteurs 32 sont soudées. Dans un exemple de réalisation, les lames 39 sont réalisées en cuivre. En variante, elles pourraient être réalisées en aluminium.

Les lames 39 du collecteur sont portées par un support 40 en matière plastique solidaire de l'arbre 12. Le support 40 est, pour une bonne tenue en température, en matière plastique thermodurcissable, telle qu'une matière plastique phénolique thermodurcissable par exemple de la bakélite. En l'occurrence, le collecteur 36 qui présente des lames 39 s'étendant longitudinalement côte à côte sur la périphérie externe du support 40 est du type "tambour". Toutefois, en variante, le collecteur 36 utilisé pourra être un collecteur de type plat.

Pour assurer un maintien radial des conducteurs 32 dans les chignons 35 et éviter ainsi les effets de la force centrifuge, des frettes 43 sont positionnées autour des chignons 35 et des zones de soudure.

Du côté opposé du collecteur 36, l'arbre 12 porte une roue d'engrenage 44 destinée à former un planétaire dans un système de réduction de vitesse à train épicycloïdal d'un démarreur, comme décrit par exemple dans le document FR2787833.

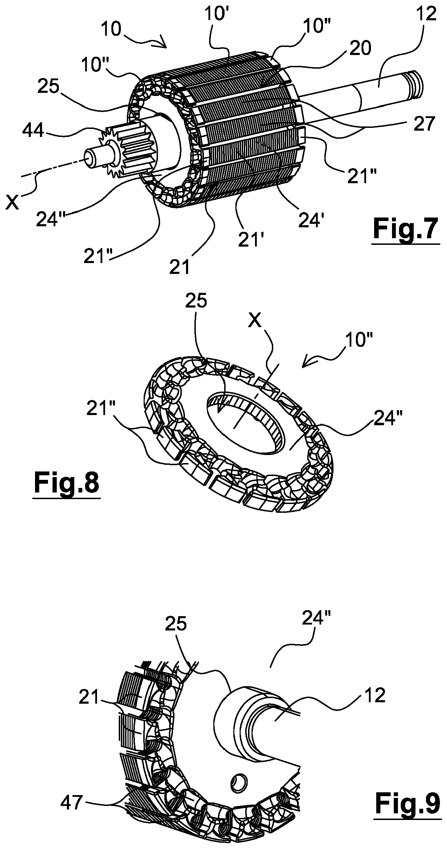

Dans la variante de réalisation selon l'invention montrée sur la figure 7, le corps 10 comprend une portion centrale 10' formée par un paquet de tôles, ainsi que deux portions axiales extrêmes 10" réalisées en matériau magnétique composite, constituant chacune une joue. Ces joues 10" sont plaquées de part et d'autre de la portion centrale 10'. La longueur axiale des joues 10" qui est de l'ordre de 5mm est très inférieure à la longueur axiale de la portion centrale 10' qui est de l'ordre de 40mm.

Plus précisément, la portion centrale 10' est réalisée par un empilement de tôles d'épaisseur fine, typiquement de 0,5 ou 0,65 mm, de façon à former un paquet de tôles emmanché à force sur l'arbre 12 de la machine. Cette portion centrale 10' forme ainsi la partie centrale 24' de la culasse 24 ainsi qu'une partie centrale 21' des dents 21 délimitant les encoches 20. De préférence, un isolant d'encoche, prenant par exemple la forme d'un papier isolant, est positionné à l'intérieur de chaque encoche 20. Cet isolant d'encoche permet de ne pas blesser les conducteurs 32 lors de leur montage dans le paquet de tôles du rotor 11 et d'isoler électriquement les conducteurs 32 par rapport au paquet de tôles relié à la masse via le carter du démarreur.

Par ailleurs, chaque joue 10" rapportée montrée sur la figure 8 , ne faisant pas partie de l'invention, constitue une des extrémités axiales 24" de la culasse 24 et une des extrémités axiales 21" de chaque dent 21. Les joues 10" sont plaquées contre les faces d'extrémité de la portion centrale 10'. Les joues 10" sont positionnées de telle façon que les extrémités axiales 24" se situent dans le prolongement de la partie centrale 24' de la culasse 24, et que les extrémités axiales 21" des dents se situent dans le prolongement de la partie centrale 21' de chaque dent 21.

La surface extérieure 27 destinée à être en contact avec l'entrefer est alors formée par les surfaces extérieures accolées de la portion centrale 10' et des deux joues 10". La partie de la surface extérieure 27 qui s'étend au-delà de la culasse 24 est réalisée dans les joues 10".

Comme on peut le voir sur la figure 9, ne faisant pas partie de l'invention, les dents 21 présentent chacune, du côté du fond 322 des conducteurs 32, une face d'extrémité axiale munie d'empreintes 47 pour le guidage des conducteurs 32. En l'occurrence, ces empreintes 47 sont réalisées sur une face d'extrémité de chaque bras d'une joue 10". De telles empreintes 47 pourraient également être réalisées dans les faces des dents 21 du rotor 11 de la figure 1 réalisé entièrement en matériau magnétique composite.

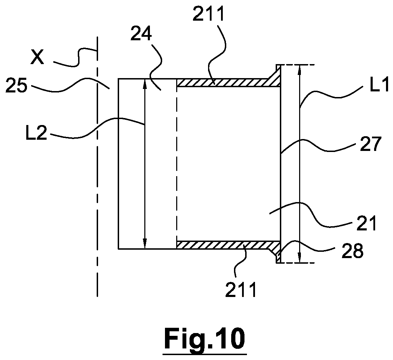

Dans le mode de réalisation selon l'invention et montré à la figure 10, seule l'extrémité axiale 211 des dents 21 est réalisée dans un matériau magnétique composite. Le reste des dents 21 et la culasse 24 sont alors réalisés d'un seul tenant en tôle feuilletée.

L'invention est également applicable à un stator d'alternateur comportant des dents orientées vers l'intérieur du corps ayant des surfaces intérieures en contact avec l'entrefer. De manière analogue à la configuration du rotor, ces surfaces présentent une longueur axiale supérieure à la longueur axiale de la culasse qui s'étend entre le fond des dents et la périphérie externe du stator. Bien entendu, la description qui précède a été donnée à titre d'exemple uniquement et ne limite pas l'invention qui est définie dans les revendications suivantes.

## Revendications

1. Induit (11) de machine électrique tournante destinée à être utilisée dans un véhicule automobile comprenant:
un corps (10) réalisé dans un matériau ferromagnétique comprenant:
i. une culasse (24), et
ii. des dents (21) s'étendant à partir de la portion centrale, chacune des dent comprenant une surface (27) destinée à venir en contact avec un entrefer de ladite machine, ladite surface (27) ayant une longueur axiale (L1) supérieure à une longueur axiale (L2) de ladite culasse (24), **caractérisé en ce que** seule l'extrémité axiale (211) des dents (21) est réalisée dans un matériau magnétique composite, le reste des dents (21) et la culasse (24) étant réalisés d'un seul tenant en tôle feuilletée.

2. Induit (11) selon la revendication 1, dans lequel un entrefer est formé entre deux surfaces (27) voisines sur toute leur longueur axiale (L1).

3. Induit selon l'une quelconque des revendications 1 ou 2, dans lequel chacune des surfaces (27) des dents (21) comprend au moins une extrémité axiale réalisée dans un matériau magnétique composite.

4. Induit selon l'une quelconque des revendications 1 à 3, dans lequel le matériau magnétique composite est de type composite magnétique souple (matériau SMC).

5. Induit selon la revendication 4, dans lequel lesdites dents (21) présentent chacune une face d'extrémité axiale munie d'empreintes (47) pour le guidage des conducteurs (32) formant un bobinage.

6. Induit selon la revendication 4 ou 5, dans lequel chaque conducteur (32) prend la forme d'une épingle.

7. Induit selon l'une quelconque des revendications 1 à 6, ledit induit (11) consistant en un rotor appartenant à un démarreur de véhicule automobile.

8. Induit selon l'une quelconque des revendications 1 à 6, ledit induit (11) consistant en un stator appartenant à un alternateur de véhicule automobile.

9. Machine électrique tournante de démarreur de véhicule automobile munie d'un induit (11) défini selon l'une quelconque des revendications précédentes.

10. Machine électrique comprenant un induit selon l'une des revendications 1 à 8, comprenant un arbre (12) et dans lequel ledit corps ferromagnétique (10) est fixé sur l'arbre (12) de ladite machine électrique tournante par collage.

11. Machine électrique selon la revendication 10, comprenant un arbre (12), et dans lequel ledit induit est monté sur un arbre (12) de ladite machine électrique tournante via un système à clavette.

## Patentansprüche

1. Anker (11) einer zur Verwendung in einem Kraftfahrzeug bestimmten rotierenden elektrischen Maschine, der enthält:
einen aus einem ferromagnetischen Werkstoff hergestellten Körper (10), der enthält:
i. ein Joch (24), und
ii. Zähne (21), die sich ausgehend vom zentralen Abschnitt erstrecken, wobei jeder der Zähne eine Fläche (27) enthält, die dazu bestimmt ist, mit einem Luftspalt der Maschine in Kontakt zu kommen, wobei die Fläche (27) eine axiale Länge (L1) größer als eine axiale Länge (L2) des Jochs (24) hat,
**dadurch gekennzeichnet, dass** nur das axiale Ende (211) der Zähne (21) aus einem magnetischen Verbundwerkstoff hergestellt ist, während der Rest der Zähne (21) und das Joch (24) aus einem Stück aus lamelliertem Blech hergestellt sind.

2. Anker (11) nach Anspruch 1, wobei ein Luftspalt zwischen zwei benachbarten Flächen (27) über ihre ganze axiale Länge (L1) gebildet wird.

3. Anker nach einem der Ansprüche 1 oder 2, wobei jede der Flächen (27) der Zähne (21) mindestens ein axiales Ende enthält, das aus einem magnetischen Verbundwerkstoff hergestellt ist.

4. Anker nach einem der Ansprüche 1 bis 3, wobei der magnetische Verbundwerkstoff von der Art weichmagnetischer Verbundwerkstoff (SMC-Werkstoff) ist.

5. Anker nach Anspruch 4, wobei die Zähne (21) je eine axiale Endseite aufweisen, die mit Vertiefungen (47) für die Führung der eine Wicklung bildenden Leiter (32) versehen ist.

6. Anker nach Anspruch 4 oder 5, wobei jeder Leiter (32) die Form einer Nadel annimmt.

7. Anker nach einem der Ansprüche 1 bis 6, wobei der Anker (11) aus einem Rotor besteht, der zu einem Starter eines Kraftfahrzeugs gehört.

8. Anker nach einem der Ansprüche 1 bis 6, wobei der Anker (11) aus einem Stator besteht, der zu einem Generator eines Kraftfahrzeugs gehört.

9. Rotierende elektrische Maschine eines Starters eines Kraftfahrzeugs, die mit einem gemäß einem der vorhergehenden Ansprüche definierten Anker (11) versehen ist.

10. Elektrische Maschine, die einen Anker nach einem der Ansprüche 1 bis 8 enthält, die eine Welle (12) enthält, und wobei der ferromagnetische Körper (10) an der Welle (12) der rotierenden elektrischen Maschine durch Kleben befestigt ist.

11. Elektrische Maschine nach Anspruch 10, die eine Welle (12) enthält, und wobei der Anker über ein Passfedersystem auf eine Welle (12) der rotierenden elektrischen Maschine montiert ist.

## Claims

1. Armature (11) for a rotary electric machine intended for use in a motor vehicle, comprising
a body (10) made from a ferromagnetic material, comprising:
i. a yoke (24), and
ii. teeth (21) extending from the central portion, each of the teeth comprising a surface (27) intended to come into contact with an air gap of said machine, said surface (27) having an axial length (L1) greater than an axial length (L2) of said yoke (24), **characterized in that** only the axial end (211) of the teeth (21) is made from a composite magnetic material, the remainder of the teeth (21) and the yoke (24) being made in one piece from laminated sheet metal.

2. Armature (11) according to Claim 1, wherein an air gap is formed between two neighbouring surfaces (27) over their entire axial length (L1).

3. Armature according to either one of Claims 1 and 2, wherein each of the surfaces (27) of the teeth (21) comprises at least one axial end made from a composite magnetic material.

4. Armature according to any one of Claims 1 to 3, wherein the composite magnetic material is of soft magnetic composite type (SMC material).

5. Armature according to Claim 4, wherein said teeth (21) each have an axial end face provided with impressions (47) for guiding conductors (32) that form a winding.

6. Armature according to Claim 4 or 5, wherein each conductor (32) takes the form of a pin.

7. Armature according to any one of Claims 1 to 6, said armature (11) consisting of a rotor which is part of a motor vehicle starter.

8. Armature according to any one of Claims 1 to 6, said armature (11) consisting of a stator which is part of a motor vehicle alternator.

9. Rotary electric machine for a motor vehicle starter, provided with an armature (11) defined according to any one of the preceding claims.

10. Electric machine comprising an armature according to one of Claims 1 to 8, comprising a shaft (12), and wherein said ferromagnetic body (10) is fixed on the shaft (12) of said rotary electric machine by adhesive bonding.

11. Electric machine according to Claim 10, comprising a shaft (12), and wherein said armature is mounted on a shaft (12) of said rotary electric machine via a cotter system.
